# EUROPÄISCHE PATENTSCHRIFT

(11) **EP 0 720 724 B1**
(45) Veröffentlichungstag und Bekanntmachung des Hinweises auf die Patenterteilung: **01.10.2003**
(21) Anmeldenummer: 95924177.9
(22) Anmeldetag: 06.07.1995
(51) Int. Cl.: G01F 1/68

(54) **SENSORTRÄGER FÜR EINE VORRICHTUNG ZUR MESSUNG DER MASSE EINES STRÖMENDEN MEDIUMS UND VERFAHREN ZUM HERSTELLEN EINES SENSORTRÄGERS**
SENSOR HOLDER FOR A DEVICE FOR MEASURING THE QUANTITY OF A FLOWING MEDIUM AND PROCESS FOR ITS PRODUCTION
SUPPORT DE DETECTEUR POUR DISPOSITIF DE MESURE DU DEBIT D'UN MILIEU EN ECOULEMENT ET PROCEDE DE PRODUCTION D'UN SUPPORT DE DETECTEUR

(30) Priorität: 22.07.1994 DE 4426102
(43) Veröffentlichungstag der Anmeldung: 10.07.1996
(73) Patentinhaber: ROBERT BOSCH GMBH, 70442 Stuttgart (DE)
(72) Erfinder: RILLING, Heinz, D-71735 Eberdingen (DE); LEHENBERGER, Stefan, D-71636 Ludwigsburg (DE)
(86) Internationale Anmeldenummer: DE9500880
(87) Internationale Veröffentlichungsnummer: WO96003622

(56) Entgegenhaltungen:
- EP-A- 0 235 357
- EP-A- 0 369 592
- DE-A- 2 103 446
- DE-A- 4 219 454
- GB-A- 2 226 641

## Beschreibung

### Stand der Technik

Die Erfindung geht aus von einem Sensorträger für eine Vorrichtung zur Messung der Masse eines strömenden Mediums, beziehungsweise von einem Verfahren zum Herstellen eines Sensorträgers, nach der Gattung des Anspruchs 1, beziehungsweise des Anspruchs 10. Es ist schon ein Sensorträger für eine Vorrichtung bekannt (DE-OS 38 44 354), bei der ein sogenanntes Heißfilm-Sensorelement in ein strömendes Medium eingebracht ist, das zur Messung der Masse des strömenden Mediums einen temperaturabhängigen Sensorbereich besitzt, der sich aus einzelnen widerstandsschichten zusammensetzt, die auf einem plattenförmigen Substrat aufgebracht sind und die wenigstens einen Heizwiderstand und wenigstens einen temperaturabhängigen Meßwiderstand umfassen. Das Heißfilmsensorelement ist zur Halterung mit seiner Unterfläche teilweise an ein zungenförmiges Stützelement angeklebt, so daß dieses in einem Meßkanal mit seinem freien Ende vom strömenden Medium umströmt wird. Zur Messung wird der Meßwiderstand auf einer weit oberhalb der Temperatur des strömenden Mediums liegenden Übertemperatur gehalten, so daß dieser im wesentlichen aufgrund von Konvektion, abhängig von der vorbeiströmenden Masse des strömenden Mediums eine bestimmte Wärmemenge an das strömende Medium abgibt. Der Heizwiderstand dient bekannterweise zur Aufrechterhaltung der konstanten Übertemperatur des Meßwiderstandes und ist in möglichst gutem Wärmekontakt zum Meßwiderstand angeordnet, um dessen Temperatur konstant zu halten. Der Meßwiderstand hat einen von der Temperatur abhängigen Widerstandswert, so daß eine Änderung der Übertemperatur eine Änderung seines widerstandswertes zur Folge hat, wobei eine mit dem Meßwiderstand und dem Heizwiderstand verbundene Regelschaltung verstimmt wird. Die Regelschaltung ist beispielsweise in Form einer brückenähnlichen Widerstandsmeßschaltung ausgebildet, die bei einer Verstimmung durch den Meßwiderscand den Heizstrom oder die Heizspannung des Heizwiderstandes ändert, um so die Übertemperatur des Meßwiderscandes konstant zu halten, wobei der zur Aufrechterhaltung der Übertemperatur des Meßwiderstandes erforderliche Heizstrom oder die Heizspannung des Heizwiderstandes ein Maß für die Masse des strömenden Mediums ist. Wie im eingangs genannten Stand der Technik entnehmbar ist, besitzt das Substrat einen weiteren Widerstand, der im folgenden als Mediumtemperaturwiderstand bezeichnet wird und der mittels aus dem Substrat ausgenommener Schlitze thermisch entkoppelt zum Heiz- und Meßwiderstand auf dem Substrat angeordnet ist. Der Mediumtemperaturwiderstand hat einen von der Temperatur abhängigen Widerstandswert und ist Teil der Regelschaltung, die gewährleistet, daß sich Änderungen der Temperatur des strömenden Mediums nicht auf die Meßgenauigkeit der Vorrichtung auswirken. Um ein präzises Meßergebnis zu erzielen, sollte die vom Heizwiderstand abgegebene Wärmemenge möglichst vollständig, das heißt, ohne daß ein Teil beispielsweise über eine Klebeschicht des Sensorelements zum Stützelement abfließt, dem Meßwiderstand zugeführt werden.

Die DE-OS 42 19 454 zeigt einen Sensorträger, der zur Halterung insbesondere von mikromechanischen Sensorelementen vorgesehen ist und der eine Ausnehmung besitzt, in welche das Sensorelement bündig eingebracht und mittels einer an einer Bodenfläche der Ausnehmung aufgebrachten Klebeschicht gehalten wird. Bekannterweise werden mikromechanische Sensoren in sogenannter mikromechanischer Bauweise durch Ausätzen eines Halbleiterkörpers, beispielsweise eines Siliziumwafers hergestellt und haben einen durch Ausätzen entstandenen, membranförmigen Sensorbereich, der wenigstens einen Heizwiderstand und wenigstens einen temperaturabhängigen Meßwiderstand aufweist. Der membranförmige Sensorbereich begrenzt dabei nur eine kleine Fläche des Sensorelements und hat eine äußerst geringe Dicke von wenigen Mikrometern, so daß nur eine kleine Fläche des Sensorbereichs vom Heizwiderstand beheizt werden muß, um in kurzer Ansprechzeit auf Änderungen der Masse des strömenden Mediums durch Änderungen der vom Heizwiderstand abgegebenen Wärmemenge zu reagieren. Beim Herstellen der Vorrichtung ist es außerordentlich wichtig, daß das Sensorelement mit seiner Oberfläche möglichst bündig zur Oberfläche des Sensorträgers in die Ausnehmung eingeklebt wird, da schon der kleinste Versatz, beispielsweise aufgrund einer ungleichmäßig aufgetragenen Klebeschicht, Wirbel und Ablösegebiete zu Folge hat, die insbesondere an der Oberfläche des Sensorelements die Wärmeabfuhr des Meßwiderstandes nachteilig beeinflussen und das Meßergebnis verfälschen. Daher ist beim Einkleben des Sensorelements in die Ausnehmung des Sensorträgers äußerste Sorgfalt notwendig, so daß insbesondere bei einer Massenherstellung der Vorrichtung ein hoher fertigungstechnischer Aufwand nötig ist, der erhebliche Produktionskosten verursacht.

### Vorteile der Erfindung

Der erfindungsgemäße Sensorträger, beziehungsweise das erfindungsgemäße Verfahren, mit den kennzeichnenden Merkmalen des Anspruchs 1, beziehungsweise des Anspruchs 10 hat demgegenüber den Vorteil, daß das Sensorelement mit äußerster Präzision bündig in die Ausnehmung des Sensorträgers einklebbar ist. Vorteilhafterweise ist es durch den erfindungsgemäßen Sensorträger möglich, daß die vom Meßwiderstand abgegebene Wärmemenge nahezu vollständig dem strömenden Medium zugeführt werden kann, so daß ein präzises Meßergebnis erzielbar ist. Besonders vorteilhaft ist, daß das erfindungsgemäße Verfahren eine besonders kostengünstige Herstellungsweise des Sensorträgers erlaubt.

Durch die in den Unteransprüchen aufgeführten Maßnahmen sind vorteilhafte Weiterbildungen und Verbesserungen des im Anspruch 1 angegebenen Sensorträgers, beziehungsweise des in Anspruch 10 angegebenen Verfahrens möglich. Vorteilhafterweise ermöglicht der erfindungsgemäße Sensorträger eine stabile Halterung des Sensorelements, so daß eine Beeinflussung des Meßergebnisses insbesondere durch Vibrationen ausgeschlossen werden kann.

### Zeichnung

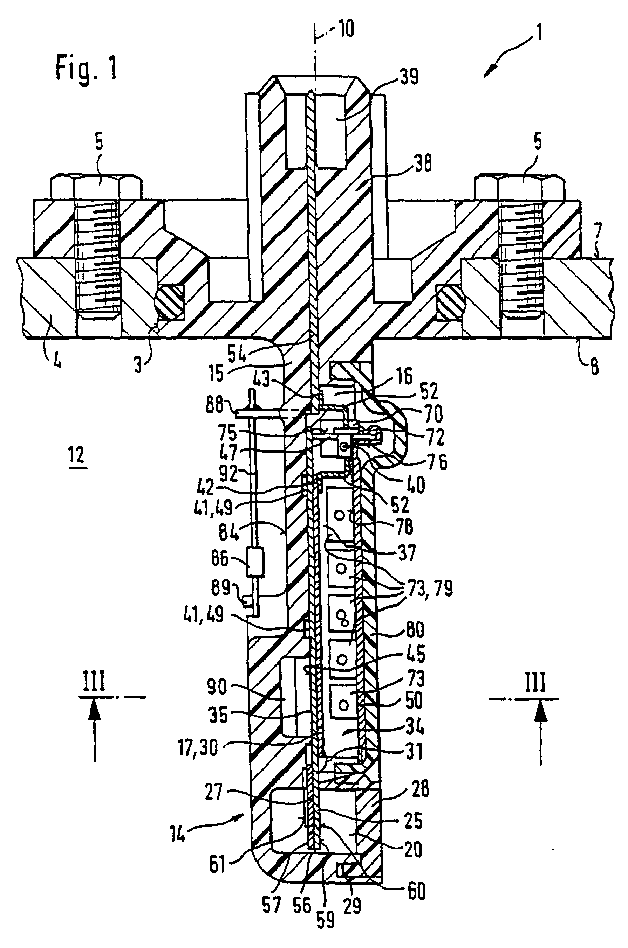

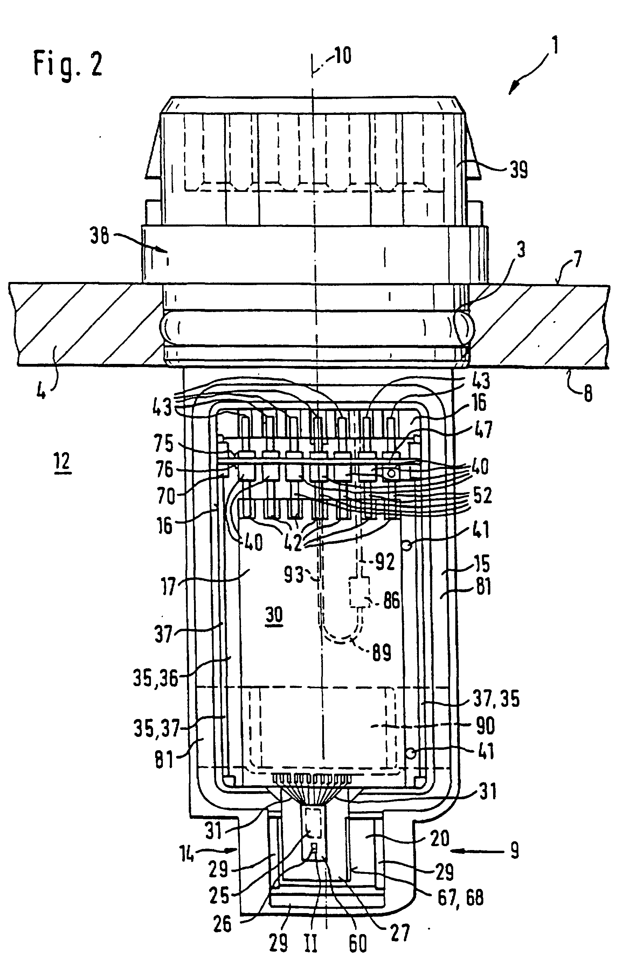

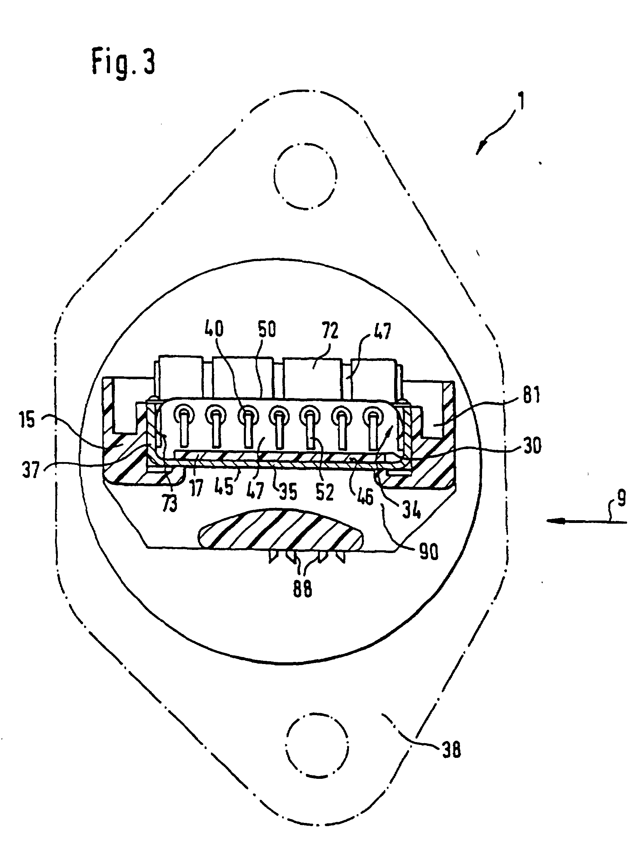

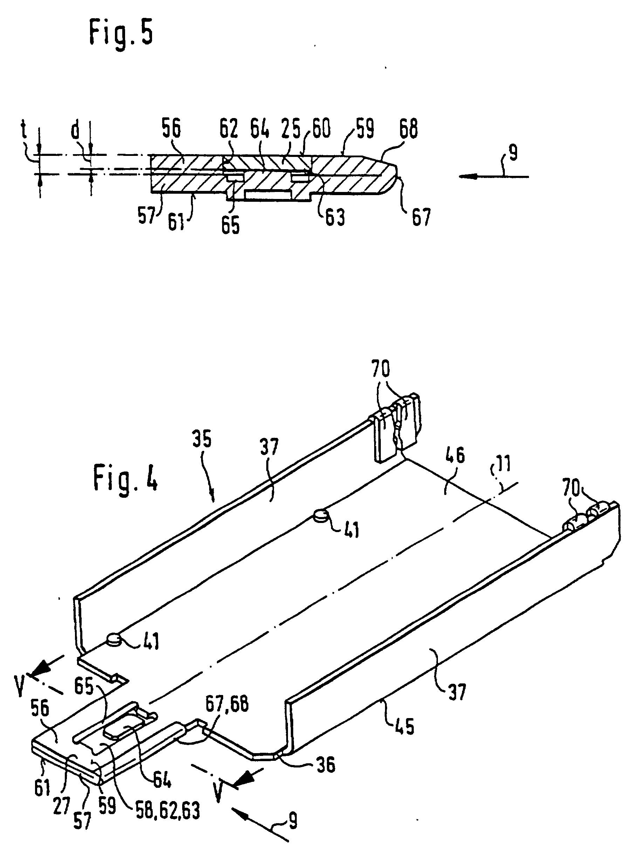

Ein Ausführungsbeispiel der Erfindung ist in der Zeichnung vereinfacht dargestellt und in der nachfolgenden Beschreibung näher erläutert. Es zeigen Figur 1 in Seitenansicht einen Schnitt durch eine mit einem erfindungsgemäßen Sensorträger ausgestattete Vorrichtung, Figur 2 eine Draufsicht der Vorrichtung mit dem erfindungsgemäßen Sensorträger, Figur 3 einen Schnitt entlang der Linie III-III in Figur 1, Figur 4 eine perspektivische Einzeldarstellung eines Bodengehäuses der Vorrichtung mit dem erfindungsgemäßen Sensorträger, Figur 5 einen Schnitt entlang einer Linie V-V in Figur 4.

### Beschreibung des Ausführungsbeispiels

Die in Figur 1 in Seitenansicht dargestellte, erfindungsgemäße Vorrichtung 1 ist zur Messung der Masse eines strömenden Mediums, insbesondere der Ansaugluftmasse einer nicht näher dargestellten Brennkraftmaschine vorgesehen. Die Vorrichtung 1 hat vorzugsweise eine schlanke zylindrische Form, die sich entlang einer mittig durch die Vorrichtung 1 hindurchgehenden Längsachse 10 erstreckt. Die Vorrichtung 1 ist durch eine Öffnung 3 einer Wandung 4, beispielsweise eines Ansaugrohres hindurchgeführt, in dem von der Brennkraftmaschine aus der Umgebung angesaugte Luft strömt. Mittels zweier Schraubverbindungen 5 ist die Vorrichtung 1 an einer Außenfläche 7 der Wandung 4 steckbar befestigt, die mit einer Innenfläche 8 einen Strömungsquerschnitt 12 begrenzt, in dem senkrecht zur Zeichenebene der Figur 1 und in die Zeichenebene hinein das Medium strömt. Die Vorrichtung 1 besitzt ein langgestrecktes Grundgehäuse 15 aus Kunststoff, an dessen freiem Endbereich 14 ein Meßkanal 20 ausgebildet ist, der mit einem etwa rechteckformigen Querschnitt etwa in die Mitte des Strömungsquerschnitts 12 hineinragt und sich etwa parallel zur Strömungsrichtung erstreckt, um vom strömenden Medium durchströmt zu werden. Innerhalb des Meßkanals 20 ist in Richtung der Längsachse 10 ein Sensorelement 25 untergebracht, das eine plattenförmige Form besitzt und das mit seiner größten Oberfläche 60 in etwa parallel zum in die Zeichenebene der Figur 1 hineinströmenden Medium ausgerichtet ist. Die Strömungsrichtung des Mediums ist in den Figuren 2 bis 5 durch entsprechende Pfeile 9 gekennzeichnet und verläuft dort von rechts nach links. Der Meßkanal 20 wird teils vom Grundgehäuse 15 und teils von einem auf das Grundgehäuse 15 aufsetzbaren, beispielsweise aus Kunststoff hergestellten Verschlußdeckel 28 begrenzt, der in eine am Endbereich 14 des Grundgehäuses 15 vorgesehene Nut 29 einsteckbar ist. Der Verschlußdeckel 28 ist der besseren Übersicht wegen in der Figur 2 nicht dargestellt.

Das Sensorelement 25 kann durch Ausätzen eines Halbleiterkörpers, beispielsweise eines Siliziumwafers, in sogenannter mikromechanischer Bauweise hergestellt werden und besitzt einen Aufbau, der zum Beispiel der DE-OS 42 19 454 entnehmbar ist und der deshalb nicht näher geschildert wird. Das Sensorelement 25 hat einen ebenfalls durch Ausätzen entstandenen, membranförmigen Sensorbereich 26, der, wie in der Figur 2, einer Draufsicht der Vorrichtung 1, dargestellt ist, von einer eingezeichneten Linie II begrenzt wird. Der Sensorbereich 26 hat eine Dicke, die nur wenige Mikrometer beträgt und besitzt mehrere, ebenfalls durch Ausätzen entstandene Widerstandsschichten, die wenigstens einen temperaturabhängigen Meßwiderstand und beispielsweise wenigstens einen Heizwiderstand bilden. Es ist auch möglich, das Sensorelement 25 als sogenanntes Heißfilm-Sensorelement vorzusehen, dessen Aufbau beispielsweise der DE-OS 36 38 138 entnehmbar ist. Derartige Heißfilm-Sensorelemente besitzen ebenfalls auf einem plattenförmigen Substrat aufgebrachte, einzelne Widerstandsschichten, die wenigstens einen temperaturabhängigen Meßwiderstand und beispielsweise wenigstens einen Heizwiderstand umfassen.

Zwischen dem Meßkanal 20 und einem außerhalb des Strömungsquerschnitts 12 am anderen Ende des Grundgehäuses 15 gelegenen Anschlußteil 38 der Vorrichtung 1 ist im Grundgehäuse 15 in einer Grundgehäuseausnehmung 16 eine elektronische Regelschaltung 30 untergebracht, die, wie in der Figur 2 dargestellt ist, mittels beispielsweise in Form von Bonddrähten ausgebildeten Sensoranschlußleitungen 31 mit dem Sensorelement 25 elektrisch verbunden ist. Die Regelschaltung 30 dient bekannterweise zur Versorgung des Sensorelements 25 und zur Auswertung der vom Sensorelement 25 gelieferten elektrischen Signale. Der Aufbau einer derartigen Regelschaltung 30 ist dem Fachmann hinlänglich bekannt und kann beispielsweise der DE-OS 36 38 138 entnommen werden. Die Regelschaltung 30 hat eine Vielzahl elektrischer Bauteile, die üblicherweise in sogenannter Hybridbauweise zu einer Hybridschaltung zusammengefaßt sind. Die Regelschaltung 30 ist in einem metallenen Schutzgehäuse 34 untergebracht, das aus einem metallenen Bodengehäuse 34 und einem metallenen Verschlußgehäuse 50 besteht, die miteinander verbindbar sind. Die Hybridschaltung ist auf einem Hybridträger 17 als integrierte Schichtschaltung aufgetragen und im Ausführungsbeispiel an eine Oberseite 46 einer zum Beispiel rechteckförmigen Grundwand 36 des metallenen Bodengehäuses 35, beispielsweise mittels eines Klebemittels angeklebt.

Das in der Figur 4 in perspektivischer Einzeldarstellung ohne Sensorelement 25 gezeigte Bodengehäuse 35 kann aus einem dünnen Metallstreifen, beispielsweise einem Metallblech hergestellt werden, wobei sich zur Bearbeitung des Metallstreifens Stanz-, Biege-, Falz-, Tiefzieh- oder Prägeverfahren eignen. Ebenfalls kann das Verschlußgehäuse 50 aus einem Metallstreifen mittels Stanz-, Biege-, Falz-, Tiefzieh, oder Prägeverfahren hergestellt werden. Die Grundwand 36 des Bodengehäuses 35 hat zum Beispiel eine etwa rechteckförmige Form, an dessen Oberseite 46 der Hybridträger 17 angeklebt ist. An den längeren Seiten der rechteckförmigen Grundwand 36 stehen jeweils senkrecht von dieser umgebogene, parallel zueinander verlaufende Seitenwände 37 ab, die zur Halterung des zwischen beide Seitenwände 37 des Bodengehäuses 35 einsetzbaren, metallenen Verschlußgehäuses 50 (Figur 1) dienen. An einer Unterseite 45 der Grundwand 36 besitzt das Bodengehäuse 35 beispielsweise vier herausgeprägte, abstehende Haltezapfen 41, die beim Einsetzen des Bodengehäuses 35 in die Grundgehäuseausnehmung 16 des Grundgehäuses 15 in korrespondierend ausgenommene Löcher 49 des Grundgehäuses 15 eingreifen, um so das Bodengehäuse 35 am Grundgehäuse 15 beispielsweise steckbar zu befestigen. Anstelle oder zusätzlich zu den Haltezapfen 41 des Bodengehäuses 35 ist es auch möglich, das Bodengehäuse 35 mittels eines Klebemittels mit dem Grundgehäuse 15 zu verkleben.

Wie in der Figur 4 dargestellt ist, besitzt das Bodengehäuse 35 eine zungenförmige Verlängerung an einer kurzen Seite der rechteckförmigen Grundwand 36, die als Sensorträger 27 ausgebildet zur Halterung des Sensorelements 25 vorgesehen ist. Der Sensorträger 27 und das Bodengehäuse 35 können in einem gemeinsamen Herstellungsprozeß, wie in der Figur 4 dargestellt, oder auch jeweils einzeln hergestellt werden, wofür sich Stanz-, Biege-, Falt-, Tiefzieh- und Prägeverfahren eignen. Nach der beispielsweise erfolgten Einzelherstellung des Sensorträgers 27 und des Bodengehäuses 35 können beide Teile wieder durch geeignete Verbindungsmittel, beispielsweise Laserschweißen, verbunden werden. Der Sensorträger 27 wird in jedem Fall durch Falten eines dünnen Metallstreifens hergestellt. Bei dem in Figur 4 dargestellten Ausführungsbeispiel wird aus der rechteckförmigen, zungenförmigen Verlängerung der Grundwand 36 mittig zu einer Schutzgehäuselängsachse 11 eine Öffnung 62 beispielsweise durch Stanzen ausgenommen. Danach wird um eine parallel zur Schutzgehäuselängsachse 11 liegenden Biegeachse ein Teil der zungenförmigen Verlängerung derart gebogen, daß im Endzustand des gebogenen Metallstreifens etwa zwei gleich große Elemente 56, 57 aneinander anliegen. Im folgenden wird das aus einer Ebene der Grundwand 36 gebogene Element als Halteelement 57 und das in der Ebene verbleibende, nicht gebogene Element mit der Öffnung 62 als Rahmenelement 56 bezeichnet. Dabei erstreckt sich das Halteelement 57 unterhalb der Unterseite 45. Wie in der Figur 5, einem Schnitt entlang einer Linie V-V in Figur 4 mit eingebrachtem Sensorelement 25, dargestellt ist, bedeckt das Halteelement 57 im fertig gebogenen Zustand von etwa 180 Grad die Öffnung 62 des nicht gebogenen Rahmenelements 56, um gemeinsam mit dem Halteelement 57 eine Ausnehmung 58 zu begrenzen. Das Rahmenelement 56, beziehungsweise die Ausnehmung 58 hat einen Querschnitt, welcher in etwa der beispielsweise rechteckförmigen, plattenförmigen Form des Sensorelements 25 entspricht und eine Tiefe t, die größer ist als eine quer zur Strömung 9 gemessene Dicke d des Sensorelements 25, um so das Sensorelement 25 vollständig in der Ausnehmung 58 aufzunehmen. Nach dem Falten des Metallstreifens wird das Halteelement 57 mittels eines an einer Außenfläche 61 des Halteelements 57 angreifenden Werkzeugs, beispielsweise eines Prägewerkzeugs verformt, so daß eine verformte Teilfläche einer von der Ausnehmung 58 des Rahmenelements 56 begrenzten Bodenfläche 63 des Halteelements 57 in Form einer plateauförmigen Erhebung 64 etwas in die Ausnehmung 58 des Rahmenelements 56 ragt. Die im Bereich der Öffnung 62 des Rahmenelements 56 ausgebildete, plateauförmige Erhebung 64 hat einen kleineren Querschnitt als ein Querschnitt der Öffnung 62 und des auf die Erhebung 64 aufgesetzten Sensorelements 25. Beim Prägevorgang ist es außerdem möglich, eine oder mehrere Klebsicken 65 in der Bodenfläche 63 auszubilden, die sich rinnenförmig in der Bodenfläche 63, beispielsweise um die plateauförmige Erhebung 64 herum erstrecken. Danach wird beispielsweise durch Prägen eine entlang der Biegeachse verlaufende und eine der Strömungsrichtung 9 zugewandte Seitenfläche 67 des Sensorträgers 27 derart verformt, daß eine um die Biegeachse abgerundete und zur Oberfläche 59 hin abgeflachte Anströmkante 68 erzielt wird. Durch die abgerundete und gegebenenfalls keilförmige Anströmkante 68 erfolgt eine gleichmäßige Anströmung entlang des Sensorelements 25 insbesondere ohne Wirbel- oder Ablösegebiete an der Oberfläche 60 des Sensorelements 25. Auf die plateauförmige Erhebung 64 ist ein Klebemittel aufgetragen, auf welche das Sensorelement 25 in der Ausnehmung 58 aufgesetzt und durch welche das Sensorelement 25 außerhalb seines Sensorbereichs 26 gehalten wird. Dabei kann sich beim Klebvorgang überschüssig aufgetragenes Klebemittel in den aus der Bodenfläche 63 ausgenommenen Klebsicken 65 ansammeln, um das Sensorelement 25 mit gleichbleibender Klebschichtdicke an der plateauförmigen Erhebung 64 anzukleben. Da die Ausarbeitung der plateauförmigen Erhebung 64 erst nach dem Falten des Metallstreifens erfolgt, ist es zudem möglich, diese mit äußerst geringer Toleranz herzustellen, so daß das Sensorelement 25 mit höchster Präzision bündig mit seiner Oberfläche 60 zur Oberfläche 59 des Rahmenelements 56 in die Ausnehmung 58 einklebbar ist. Die Ausbildung der plateauförmigen Erhebung 64 ist derart gestaltet, daß die plateauförmige Erhebung 64 den Sensorbereich 26 des Sensorelements 25 nicht überdeckt, so daß das Sensorelement 25 nur außerhalb seines Sensorbereichs 26 angeklebt wird, wodurch das Sensorelement 25 mit dem Sensorbereich 26 frei und ohne Kontakt zur Bodenfläche 63 in der Ausnehmung 58 untergebracht ist. Hierdurch ergibt sich durch ein Luftpolster zwischen dem Sensorelement 25 und der Bodenfläche 63 eine gute thermische Wärmeisolation des Sensorelements 25 im Halteelement 57. Darüber hinaus ist der Querschnitt der Ausnehmung 58 in Strömungsrichtung 9 etwas größer bemessen als der Querschnitt des Sensorelements 25, so daß sich zwischen dem Sensorelement 25 und der Wandung der Ausnehmung 58 herum ein Luftspalt ergibt, der eine gute thermische Wärmeisolation des Sensorelements 25 im Rahmenelement 56 ermöglicht. Die Höhe der plateauförmigen Erhebung 64 ist so gewählt, daß sich zwischen der Oberfläche 59 des Rahmenelements 56 und der Oberfläche 60 des Sensorelements 25 keine Stufe ergibt.

Zur elektrischen Verbindung der Hybridschaltung am Hybridträger 17 mit einer am Anschlußteil 38 der Vorrichtung 1 ausgebildeten, elektrischen Steckverbindung 39 sind mehrere Anschlußleitungen 54 vorgesehen, die, wie in der Figur 2 dargestellt ist, von der Steckverbindung 39 bis nach außerhalb des Bodengehäuses 35 führen und deren Enden Kontaktstellen 43 im Grundgehäuse 15 bilden. Mittels in U-Form gebogener, beispielsweise von Drähten gebildeten Hybridanschlußleitungen 52 sind die Kontaktstellen 43 mit entsprechenden Kontaktstellen 42 des Hybridträgers 17 elektrisch verbunden. Die Hybridanschlußleitungen 52 werden von außen durch einzelne Durchführkondensatoren 40 hindurch in das Innere des Bodengehäuses 35 zum Hybridträger 17 geführt und an ihren jeweiligen Drahtenden mit den Kontaktstellen 42 des Hybridträgers 17 und mit den Kontaktstellen 43 im Grundgehäuse 15, beispielsweise durch Löten oder Laserschweißen, elektrisch kontaktiert. Die einzelnen Durchführkondensatoren 40 sind in einem gemeinsamen Steckteil 47 in vorgesehene Öffnungen untergebracht und dort beispielsweise durch eine Lötverbindung gehalten und mit dem Steckteil 47 elektrisch verbunden. Zum Einbau des Steckteils 47 in das Bodengehäuse 35 sind jeweils an den Seitenwänden 37 des Bodengehäuses 35 beispielsweise zwei Federelemente 70 vorgesehen, zwischen denen das Steckteil 47 zwischen die Seitenwände 37 des Bodengehäuses 35 steckbar eingeführt wird, wonach das Steckteil 47 eine der Steckverbindung 39 zugewandte, metallene Vorderwand des Bodengehäuses 35 bildet. Die Federelemente 70 werden bei der Herstellung des Bodengehäuses 35 in einem Stanz- und Biegevorgang an den Seitenwänden 37 ins Innere des Bodengehäuses 35 weisend mit angeformt. Beim Herstellen des Steckteils 47 wird dieses mit den einzelnen, rohrförmigen Durchführkondensatoren 40 bestückt, wonach die Hybridanschlußleitungen 52 in die Durchführkondensatoren 40 eingeführt und beispielsweise durch eine Lötverbindung gehalten und elektrisch kontaktiert werden. Danach können die Hybridanschlußleitungen 42 in U-Form gebogen werden, so daß das Steckteil 47 in einfacher Art und Weise als separates Steckmodul in das Bodengehäuse 35 eingeschoben und von den Federelementen 70 gehalten wird, wobei sich über die Federelemente 70 eine Masseverbindung vom Steckteil 47 zum Bodengehäuse 35 ergibt. Nach dem Einsetzen des Steckteils 47 können die Hybridanschlußleitungen 52 an ihren jeweiligen Drahtenden an den Kontaktstellen 42 des Hybridträgers 17 und an den Kontaktstellen 43 im Grundgehäuse 15, beispielsweise durch Löten oder Bonden, elektrisch kontaktiert werden. Von den am Grundgehäuse 15 vorgesehenen Kontaktstellen 43 führen die elektrischen Anschlußleitungen 54 innerhalb des Grundgehäuses 15 zur Steckverbindung 39, die im Ausführungsbeispiel beispielsweise als Steckeranschluß ausgebildet ist. Zur elektrischen Verbindung der Regelschaltung 30 wird ein elektrischer Stecker auf den Steckeranschluß aufgesetzt, der mit einem nicht dargestellten, elektronischen Steuergerät verbunden ist, das die von der Regelschaltung 30 bereitgestellten, elektrischen Signale auswertet, um damit beispielsweise eine Motorleistungssteuerung der Brennkraftmaschine durchzuführen.

Das Verschlußgehäuse 50 ist zur Abdeckung des Bodengehäuses 35 und des Hybridträgers 17 vorgesehen und umgreift, wie in der Figur 1 dargestellt ist, das Steckteil 47 mit spangenartig ausgebildeten Federelementen 72. Die Federelemente 72 bedecken dabei nur teilweise eine der Steckverbindung 39 zugewandte Vorderfläche 75 und eine dem Hybridträger 17 zugewandte Rückfläche 76 des Steckteils 47, um durch einen federnden Kontakt eine Masseverbindung vom Verschlußgehäuse 50 zum Steckteil 47 und von diesem über die Federelemente 70 zum Bodengehäuse 35 zu erhalten. Darüber hinaus besitzt das Verschlußgehäuse 50 an seinen zwei längeren Seiten seiner rechteckförmigen Grundfläche 78 zwei abstehende Seitenwände 79, die zum Beispiel mittels mehrerer Schlitze in mehrere Federelemente 73 unterteilt sind. Die Federelemente 73 werden beim Herstellen des Verschlußgehäuses 50 zum Beispiel etwas nach außen verspreizt, so daß diese, wie in der Figur 3, einer Schnittdarstellung entlang einer Linie III-III, dargestellt ist, im montierten Zustand nach dem Einsetzen des Verschlußgehäuses 50 in das Bodengehäuse 35 an den Seitenwänden 37 des Bodengehäuses 35 federnd anliegen.

Das aus Bodengehäuse 35, Verschlußgehäuse 50 und beispielsweise Steckteil 47 gebildete Schutzgehäuse 34 umgibt die Hybridschaltung allseits, um die Regelschaltung 30 insbesondere gegen einstrahlende elektromagnetische Wellen zu schützen. Das mit den Durchführkondensatoren 40 bestückte Steckteil 47 stellt dabei sicher, daß über die Anschlußleitungen 54 und die Hybridanschlußleitungen 52 keine elektromagnetischen Wellen zur Hybridschaltung gelangen, sondern von den Durchführkondensatoren 40 ausgefiltert werden. Darüber hinaus wird durch das metallene Bodengehäuse 35 und das metallene Verschlußgehäuse 50 ein Abstrahlen elektromagnetischer Wellen vermieden, die von der Regelschaltung 30 ausgehen können, so daß auch in unmittelbarer Nähe der Vorrichtung 1 angeordnete, elektrische Systeme unbeeinflußt von der Vorrichtung 1 arbeiten können. Ist gegebenenfalls kein derartiger Entstörschutz mit den Durchführkondensatoren 40 erwünscht, so kann das Steckteil 47, ohne daß aufwendige konstruktive Änderungen am Bodengehäuse 35 notwendig sind, einfach weggelassen werden. Es ist nur erforderlich, die Kontaktstellen 43 im Grundgehäuse 15 mit den Kontaktstellen 42 des Hybridträgers 17, beispielsweise durch Bonden, Löten oder Laserschweißen, elektrisch miteinander zu verbinden.

Aus Verschmutzungsgrunden ist das Verschlußgehäuse 50 noch von einer aus Kunststoff hergestellten Abdeckung 80 bedeckt, die, wie in der Figur 1 dargestellt ist, zum Beispiel in eine um die Grundgehäuseausnehmung 16 umlaufende Nut 81 des Grundgehäuses 35 einsteckbar ist. Die Abdeckung 80 ist der besseren Übersicht wegen in der Figur 2 nicht dargestellt.

Zur Kompensation des Meßwertes des Sensorelements 25 bezüglich der Temperatur des strömenden Mediums besitzt die Vorrichtung 1 einen Widerstand, der im folgenden als Mediumtemperaturwiderstand 86 bezeichnet wird. Der Mediumtemperaturwiderstand 86 ist zum Beispiel ein Teil der Regelschaltung 30, die gewährleistet, daß sich Änderungen der Temperatur des strömenden Mediums nicht auf die Meßgenauigkeit des Vorrichtung 1 auswirken. Es ist auch möglich, anstelle oder zusätzlich zur elektrischen Verbindung des Mediumtemperaturwiderstandes 86 mit der Regelschaltung 30, den Mediumtemperaturwiderstand 86 mittels einer elektrischen Anschlußleitung im Grundgehäuse 15 und eines zusätzlichen Kontaktpins in der Steckverbindung 39 von dem auf die Steckverbindung 39 aufsetzbaren Stecker separat zu kontaktieren, so daß dieser auch mit weiteren Steuerungsschaltungen der Brennkraftmaschine, beziehungsweise mit dem elektronischen Steuergerät, verbunden werden kann. Der Mediumtemperaturwiderstand 86 hat einen von der Temperatur abhängigen Widerstandswert. Dabei kann der Mediumtemperaturwiderstand 86 als NTC- oder PTC-Widerstand ausgebildet sein und beispielsweise einen Widerstand in Form eines Drahtes, eines Films oder einer Folie aufweisen. Der Mediumtemperaturwiderstand 86 ist außerhalb des Meßkanals 20 an einer in etwa parallel zur Längsachse 10 verlaufenden Außenfläche 84 des Grundgehäuses 15 mit Abstand zur Außenfläche 84 angeordnet. Dabei erstreckt sich das Grundgehäuse 15 im Bereich des Mediumtemperaturwiderstandes 86 senkrecht zur Längsachse 10 auf seiner dem Mediumtemperaturwiderstand 86 zugewandten Seite nur bis zur Außenfläche 84. Der außerhalb des Grundgehäuses 15 untergebrachte Mediumtemperaturwiderstand 86 hat zur elektrischen Kontaktierung nebeneinander angeordnete Anschlußdrähte 92, 93, von denen wenigstens einer 93 in U-Form so gebogen ist, daß er teilweise parallel zum anderen Anschlußdraht 92 verläuft. Die Anschlußdrähte 92, 93 sind an zwei in Form von Kontaktstiften ausgebildeten, elektrischen Halterungen 88 beispielsweise durch Löten befestigt und mit den Anschlußdrähten 92, 93 elektrisch verbunden. Die Halterungen 88 ragen etwa gegenüberliegend dem Steckteil 47 des Bodengehäuses 35 aus der Außenfläche 80 des Grundgehäuses 15 in den Strömungsquerschnitt 12 heraus und liegen in Strömungsrichtung 9 hintereinander. Zur weiteren Halterung des Mediumtemperaturwiderstandes 86 ist am Grundgehäuse 15 eine von der Außenfläche 84 abstehende Kunststoffnase 89 vorgesehen, um welche der wenigstens eine gebogene Anschlußdraht 93 an einer den Halterungen 88 abgewandten Seite der Kunststoffnase 89 in einer Nut verläuft, so daß der Mediumtemperaturwiderstand 86 durch die Anschlußdrähte 92, 93 mit Abstand zur Außenfläche 84 des Grundgehäuses 15 im strömenden Medium angeordnet ist. Das Anbringen des Mediumtemperaturwiderstandes 86 außerhalb des Meßkanals 20 am Grundgehäuse 15 bietet den Vorteil, daß durch einen räumlichen Abstand des Mediumtemperaturwiderstandes 86 einerseits zum Sensorelement 25 und andererseits zur Hybridschaltung des Hybridträgers 17 eine thermische Beeinflussung des Mediumtemperaturwiderstandes 86 ausgeschlossen ist. Außerdem ist der Mediumtemperaturwiderstand 86 außerhalb des Grundgehäuses 15 keiner Strömungsbeeinflussung ausgesetzt, die beispielsweise von Begrenzungswänden des Meßkanals 20 ausgeht, so daß dieser ungestört die Temperatur des strömenden Mediums annehmen kann.

Wie in der Figur 3 dargestellt ist, ist zwischen dem Meßkanal 20 und der Kunststoffnase 89 ein in Strömungsrichtung 9 verlaufender Kühlkanal 90 vorgesehen, der zur Kühlung der Regelschaltung 30 dient und der die thermische Entkopplung des Mediumtemperaturwiderstandes 86 einerseits zum Sensorelement 25 und andererseits zur Regelschaltung 30 weiter verbessert. Der Kühlkanal 90 erstreckt sich in etwa parallel zur Strömungsrichtung 9 des strömenden Mediums, quer durch das Grundgehäuse 15 hindurch, wobei die Unterseite 45 des Bodengehäuses 35 teilweise vom Kunststoff des Grundgehäuses 15 befreit ist. Durch die teilweise kunststofffreie Unterseite 45 kann die von der Regelschaltung 30 abgegebene Wärme über den Hybridträger 17 zum Bodengehäuse 35 und zum Kühlkanal 90 abfließen, wodurch eine Erwärmung des Sensorelements 25 und des Mediumtemperaturwiderstandes 86 durch von der Regelschaltung 30 abgegebener Wärme vermieden wird. Der Kühlkanal 90 hat zum Beispiel einen etwa rechteckförmigen Eintrittsquerschnitt, der sich in Strömungsrichtung 9 zur Mitte der Vorrichtung 1 zu einem kleinsten Querschnitt verjüngt und sich weiter in Strömungsrichtung 9 wieder vergrößert, um mit einem rechteckförmigen Austrittsquerschnitt, dessen Größe dem Eintrittsquerschnitt entspricht, zu enden. Die Ausbildung des Kühlkanals 90 gewissermaßen in Form einer halbseitigen Lavaldüse bewirkt, daß das strömende Medium vom Eintrittsquerschnitt zur Unterseite 45 des Bodengehäuses 35 hin beschleunigt wird, um durch eine vergrößerte Geschwindigkeit an der Unterseite 45 des Bodengehäuses 35 die Wärmeabfuhr von der Regelschaltung 30 zum strömenden Medium zu erhöhen.

## Patentansprüche

1. Sensorträger für eine Vorrichtung zur Messung der Masse eines strömenden Mediums, insbesondere der Ansaugluftmasse von Brennkraftmaschinen, mit einem Sensorträger und mit einem in das strömende Medium eingebrachten, plattenförmigen Sensorelement, das einen Sensorbereich mit wenigstens einem temperaturabhängigen Meßwiderscand aufweist, wobei das Sensorelement in einer Ausnehmung des Sensorträgers im wesentlichen bündig untergebracht und in der Ausnehmung durch Klebung gehalten ist, **dadurch gekennzeichnet, daß** der Sensorträger (27) zwei Elemente, ein Rahmenelement (56) und ein Halteelement (57) aufweist, die übereinander angeordnet sind, wobei in dem Rahmenelement (56) eine Öffnung (62) vorgesehen ist und die vom Halteelement (57) bedeckt wird, so daß durch die durch das Halteelement (57) bedeckte Öffnung (62) die Ausnehmung (58) für das Sensorelement (25) gebildet wird und das Sensorelement (25) auf das Halteelement (57), in der Ausnehmung (58) geklebt ist.

2. Sensorträger nach Anspruch 1, **dadurch gekennzeichnet, daß** der Sensorträger (27) eine abgerundete oder abgeflachte, dem strömenden Medium entgegengerichtete Anströmkante (68) hat.

3. Sensorträger nach Anspruch 1, **dadurch gekennzeichnet, daß** das Rahmenelement (56) und das Halteelement (57) plattenförmig ausgebildet sind.

4. Sensorträger nach Anspruch 1, **dadurch gekennzeichnet, daß** das Rahmenelement (56) und das Halteelement (57) durch Verbindungsmittel miteinander verbindbar sind.

5. Sensorträger nach Anspruch 4, **dadurch gekennzeichnet, daß** das Rahmenelement (56) und das Halteelement (57) aus einem Metallstreifen gebildet sind und über eine Biegeachse miteinander in Verbindung stehen.

6. Sensorträger nach Anspruch 1, **dadurch gekennzeichnet, daß** eine Bodenfläche (63) des Halteelements (57) im Bereich der Öffnung (62) des Rahmenelements (56) eine Erhebung (64) hat.

7. Sensorträger nach Anspruch 6, **dadurch gekennzeichnet, daß** die Erhebung (64) einen kleineren Querschnitt als ein Querschnitt der Öffnung (62) und des auf die Erhebung (64) aufgesetzten Sensorelements (25) hat.

8. Sensorträger nach Anspruch 1, **dadurch gekennzeichnet, daß** der Sensorträger (27) Teil eines eine Regelschaltung (30) aufnehmenden, metallenen Schutzgehäuses (34) der Vorrichtung (1) ist.

9. Sensorträger nach Anspruch 7, **dadurch gekennzeichnet, daß** das Sensorelement (25) in einem Bereich außerhalb seines Sensorbereichs (26) an der Erhebung (64) angeklebt ist.

10. Verfahren zum Herstellen eines Sensorträgers einer Vorrichtung zum Messen der Masse eines strömenden Mediums nach einem der Ansprüche 1 bis 9, **dadurch gekennzeichnet, daß** aus einem Metallstreifen zunächst eine Öffnung (62) ausgenommen wird, die in etwa der äußeren Form des Sensorelements (25) entspricht, danach der Metallstreifen um eine Biegeachse außerhalb der Öffnung (62) gebogen wird, so daß ein gebogener Teil des Metallstreifens ein Halteelement (57) und ein nicht gebogener Teil des Metallstreifens ein Rahmenelement (56) des Sensorträgers (27) bildet, danach das Halteelement (57) die Öffnung (62) des Rahmenelements (56) bedeckt und mit diesem eine Ausnehmung (58) bildet, danach mittels eines an einer Außenfläche (61) des Halteelements (57) angreifenden Werkzeugs eine von der Öffnung (62) des Rahmenelements (56) begrenzte Bodenfläche (63) des Halteelements (57) wenigstens teilweise verformt wird, so daß eine verformte Teilfläche der Bodenfläche (63) in Form einer plateauförmigen Erhebung (64) etwas in die Öffnung (62) ragt.

11. Verfahren nach Anspruch 10, **dadurch gekennzeichnet, daß** zur Bearbeitung des Metallstreifens Stanz-, Biege-, Palt-, Tiefzieh- oder Prägeverfahren einsetzbar sind.

## Claims

1. Sensor holder for a device for measuring the mass of a flowing medium, in particular the mass of the intake air of internal combustion engines, having a sensor carrier and having a plate-shaped sensor element which is introduced into the flowing medium and which has a sensor region with at least one temperature-dependent measuring resistor, the sensor element being accommodated essentially flush in a recess of the sensor holder and being secured in the recess by bonding, **characterized in that** the sensor holder (27) has two elements, a frame element (56) and a securing element (57) which are arranged one on top of the other, an opening (62) being provided in the frame element (56) and being covered by the securing element (57) so that the recess (58) for the sensor element (25) is formed by the opening (62) which is covered by the securing element (57) and the sensor element (25) is bonded to the securing element (57) in the recess (58) .

2. Sensor holder according to Claim 1, **characterized in that** the sensor holder (27) has a rounded or flattened onflow edge (68) which is opposed to the flowing medium.

3. Sensor holder according to Claim 1, **characterized in that** the frame element (56) and the securing element (57) are plate-shaped constructions.

4. Sensor holder according to Claim 1, **characterized in that** the frame element (56) and the securing element (57) can be connected to one another by connecting means.

5. Sensor holder according to Claim 4, **characterized in that** the frame element (56) and the securing element (57) are formed from a metal strip and are connected to one another by means of a bending axis.

6. Sensor holder according to Claim 1, **characterized in that** a bottom face (63) of the holding element (57) has an elevation (64) in the region of the opening (62) in the frame element (56).

7. Sensor holder according to Claim 6, **characterized in that** the elevation (64) has a smaller cross section than a cross section of the opening (62) and of the sensor element (25) which is fitted onto the elevation (64).

8. Sensor holder according to Claim 1, **characterized in that** the sensor holder (27) is part of a metal protective housing (34) of the device (1) which holds a control circuit (30).

9. Sensor holder according to Claim 7, **characterized in that** the sensor element (25) is bonded onto the elevation (64) in a region outside the sensor region (26) of said sensor element (25).

10. Method for manufacturing a sensor holder of a device for measuring the mass of a flowing medium according to one of Claims 1 to 9, **characterized in that** firstly an opening (62) which corresponds approximately to the external shape of the sensor element (25) is made in a metal strip, the metal strip is then bent about a bending axis outside the opening (62) so that a bent part of the metal strip forms a securing element (57) and a non-bent part of the metal strip forms a frame element (56) of the sensor holder (27), the securing element (57) then covers the opening (62) in the frame element (56) and forms a recess (58) with the latter, and a bottom face (63) of the securing element (57) is then at least partially deformed by means of a tool engaging on an outer face (61) of the securing element (57), said bottom face (63) being bounded by the opening (62) in the frame element (56) and said deformation being such that a deformed partial face of the bottom face (63) in the form of a plateau-shaped elevation (64) projects somewhat into the opening (62).

11. Method according to Claim 10, **characterized in that** punching, bending, folding, deep-drawing or stamping methods can be used to process the metal strip.

## Revendications

1. Support de capteur pour un dispositif de mesure de la masse d'un milieu en écoulement, en particulier de la masse de l'air d'aspiration de moteurs à combustion interne, comprenant un support de capteur et un élément capteur en forme de plaque, placé dans le milieu en écoulement, qui présente une région de capteur qui possède au moins une résistance de mesure sensible à la température, l'élément capteur étant logé dans un évidement du support de capteur, sensiblement à l'affleurement et étant maintenu dans l'évidement par collage,
**caractérisé en ce que**
l'élément capteur (27) présente deux éléments, un élément cadre (56) et un élément de fixation (57), qui sont disposés l'un au-dessus de l'autre, alors que dans l'élément de cadre (56), une ouverture (62) est recouverte par l'élément de fixation (57), de sorte que l'évidement (58) prévu pour l'élément capteur (25) est formé par l'ouverture (62) recouverte par l'élément de fixation (57) et que l'élément capteur (25) est collé sur l'élément de fixation (57) à l'intérieur de l'évidement (58).

2. Support de capteur selon la revendication 1,
**caractérisé en ce que**
le support de capteur (27) possède un bord d'attaque (68) arrondi ou méplat dirigé en sens inverse du milieu en écoulement.

3. Support de capteur selon la revendication 1,
**caractérisé en ce que**
l'élément cadre (56) et l'élément de fixation (57) sont réalisés en forme de plaque.

4. Support de capteur selon la revendication 1,
**caractérisé en ce que**
l'élément cadre (56) et l'élément de fixation (57) peuvent être assemblés l'un à l'autre par des moyens d'assemblage.

5. Support de capteur selon la revendication 4,
**caractérisé en ce que**
l'élément cadre (56) et l'élément de fixation (57) sont formés à partir d'une bande de métal et sont reliés l'un à l'autre par l'intermédiaire d'un axe de pliage.

6. Support de capteur selon la revendication 1,
**caractérisé en ce que**
la surface de fond (63) de l'élément de fixation (57) possède une protubérance (64) dans la région de l'ouverture (62) de l'élément cadre (56).

7. Support de capteur selon la revendication 6,
**caractérisé en ce que**
la protubérance (64) a une section plus petite qu'une section de l'ouverture (62) et de l'élément capteur (25) qui est appliqué sur la protubérance (64).

8. Support de capteur selon la revendication 1,
**caractérisé en ce que**
le support de capteur (27) fait partie d'un boîtier de protection métallique (34) du dispositif (1) qui renferme un circuit régulateur (30).

9. Support de capteur selon la revendication 7,
**caractérisé en ce que**
l'élément capteur (25) est collé sur la protubérance (64) dans une région située à l'extérieur de sa région formant capteur (26).

10. Procédé de fabrication d'un support de capteur appartenant à un dispositif de mesure de la masse d'un milieu en écoulement, selon une des revendications 1 à 9,
**caractérisé en ce qu'**
on découpe tout d'abord dans une bande de métal une ouverture (62) qui correspond à peu près à la forme extérieure de l'élément capteur (25), puis on replie la bande de métal autour d'un axe de pliage situé en dehors de l'ouverture (62), de sorte qu'une partie pliée de la bande de métal forme un élément de fixation (57) et une partie non pliée de la bande de métal forme un élément cadre (56) du support de capteur (27), puis l'élément de fixation (57) recouvre l'ouverture (62) de l'élément cadre (56) et forme un évidement (58) avec ce dernier, puis, au moyen d'un outil qui attaque une surface extérieure (61) de l'élément de fixation (57), on déforme au moins partiellement une surface de fond (63) de l'élément de fixation (57) limitée par l'ouverture (62) de l'élément cadre (56), de sorte qu'une surface partielle déformée de la surface de fond (63), formant une protubérance (64) en forme de plateau, fait légèrement saillie dans l'ouverture (62).

11. Procédé selon la revendication 10,
**caractérisé en ce que**
pour le façonnage de la bande de métal, on peut mettre en oeuvre des procédés de découpage, cambrage, pliage, emboutissage ou estampage.
